(19) **Europäisches Patentamt / European Patent Office / Office européen des brevets**

(11) **EP 4 574 531 A1**

(12) **EUROPEAN PATENT APPLICATION**
published in accordance with Art. 153(4) EPC

(43) Date of publication:
**25.06.2025 Bulletin 2025/26**

(21) Application number: **23854745.9**

(22) Date of filing: **11.07.2023**

(51) International Patent Classification (IPC):
**B60L 15/20** (2006.01)    **B60W 30/20** (2006.01)

(52) Cooperative Patent Classification (CPC):
**B60L 15/20; B60W 30/20**

(86) International application number:
**PCT/JP2023/025521**

(87) International publication number:
**WO 2024/038708 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.08.2022 JP 2022129524**

(71) Applicants:
- **Mitsubishi Jidosha Kogyo Kabushiki Kaisha**
  **Tokyo 108-8410 (JP)**
- **The University of Tokyo**
  **Bunkyo-ku, Tokyo 113-8654 (JP)**

(72) Inventors:
- **TAKAHASHI, Ryota**
  **Tokyo 108-8410 (JP)**

- **FUJIMOTO, Hiroshi**
  **Tokyo 113-8654 (JP)**
- **FUSE, Hiroyuki**
  **Tokyo 113-8654 (JP)**
- **YU, Guangzhi**
  **Tokyo 113-8654 (JP)**
- **TAKAHASHI, Naoki**
  **Tokyo 108-8410 (JP)**
- **OKAMURA, Yutaro**
  **Tokyo 108-8410 (JP)**
- **MATSUO, Shunsuke**
  **Tokyo 108-8410 (JP)**
- **KOGA, Ryosuke**
  **Tokyo 108-8410 (JP)**

(74) Representative: **Vossius & Partner**
**Patentanwälte Rechtsanwälte mbB**
**Siebertstrasse 3**
**81675 München (DE)**

(54) **VEHICLE CONTROL DEVICE AND VEHICLE CONTROL METHOD**

(57) The disclosed vehicle control device (10) for a vehicle (1), the vehicle (1) including: a left driving system including a left axle (4L) and a left wheel (5L) and a right driving system including a right axle (4R) and a right wheel (5R); and detectors that each detect one of an actual speed of the left driving system or the left driving source (2L) and an actual speed of the right driving system or the right driving source (2R), the vehicle control device (10) includes: a calculator (11) that calculates an equivalent sum value corresponding to a sum of the two actual speeds and an equivalent difference value corresponding to a difference between the two actual speeds; a sum model that models motion states of the left and right driving systems while the vehicle (1) is running straight, the equivalent sum value being applied to the sum model; a difference model that models motion states of the left and right driving systems while the vehicle (1) is cornering, the equivalent difference value being applied to the difference model; and a controller (13) that separates a sum mode and a difference mode, and controls outputs of the left and right driving sources (2L, 2R), using a sum instruction torque and a difference instruction torque respectively obtained from the sum model and the difference model.

**EP 4 574 531 A1**

FIG. 1

**Description**

[Technical Field]

The embodiment discussed herein relates to a vehicle control device and a vehicle control method that controls a driving source mounted on a vehicle.

[Background Technique]

Conventionally, for a vehicle provided with multiple driving sources, a method has been known in which an operating state of each driving source is controlled while suppressing vibration of a driving power transmission system by using a vehicle model that models the behavior of the driving power transmission system (see Patent Document 1).

[Prior Art Document]

[Patent Document]

[Patent Document 1] JP 2019-103249 A

[Summary of Invention]

[Problems to be Solved by Invention]

Conventionally, for vibration suppressing control a scheme using a band-pass filter (BPF) has been known. This is a scheme that extracts a vibration of a particular frequency band wished to be suppressed from an actual rotation speed of a driving source or an actual rotation speed of an axle or a wheel and applies torques to suppress the vibration to, for example, the left and right driving sources or the left and right axles. However, the behavior (e.g., vibration) of a driving force transmission system is different between a running-straight state and a cornering state and also the resonant frequency is different between the running-straight state and the cornering state. For the above, there is need to construct a control to suppress vibrations generated while the vehicle is running straight and a control to suppress vibrations generated while the vehicle cornering, and consequently the control configuration tends to be complicated. Further, for example, when control for suppressing the vibration of one of the left and right axles is performed, the control (output) also affects the other axle, which makes it difficult to perform an appropriate vibration suppressing control.

With the foregoing problems in view, one of the objects of the present disclosure is to provide a vehicle control device and a vehicle control method that can suppress vibrations with a simple configuration, avoiding interference of left and right controls with each other. In addition to this object, actions and effects which are derived from each configuration of "Embodiment to Carry out Invention" to be described below and which conventional technique does not attain are regarded as other objects of the present disclosure.

[Means to Solve Problems of Invention]

The disclosed vehicle control device and vehicle control method can be achieved in the embodiment and the application to be disclosed below and solve at least some of the above problems.

The disclosed vehicle control device is for controlling a vehicle including: a left driving system including a left axle and a left wheel, motion power from a left driving source being transmitted to the left axle and the left wheel; a right driving system including a right axle and a right wheel, motion power from a right driving source being transmitted to the right axle and the right wheel; and detectors that each detect one of an actual speed of the left driving system or the left driving source and an actual speed of the right driving system or the right driving source. The vehicle control device includes: a calculator that calculates an equivalent sum value corresponding to a sum of the two actual speeds and an equivalent difference value corresponding to a difference between the two actual speeds; a sum model that models motion states of the left driving system and the right driving system while the vehicle is running straight, the equivalent sum value being applied to the sum model; a difference model that models motion states of the left driving system and the right driving system while the vehicle is cornering, the equivalent difference value being applied to the difference model; and a controller that separates the two actual speeds into a sum mode and a difference mode by applying the equivalent sum value to the sum model and applying the equivalent difference value to the difference model, and controls outputs of the left driving source and the right driving source, using a sum instruction torque obtained from the sum model and a difference instruction torque obtained from the difference model.

The disclosed vehicle control method is for a vehicle including: a left driving system including a left axle and a left wheel, motion power from a left driving source being transmitted to the left axle and the left wheel; a right driving system including a right axle and a right wheel, motion power from a right driving source being transmitted to the right axle and the right wheel; and detectors that each detect one of an actual speed of the left driving system or the left driving source and an actual speed of the right driving system or the right driving source. The vehicle control method includes: preparing a sum model that models motion states of the left driving system and the right driving system while the vehicle is running straight and a difference model that models motion states of the left driving system and the right driving system while the vehicle is cornering in advance; calculating an equivalent sum value corresponding to a sum of the two actual speeds and an equivalent difference value corresponding to a difference between the two actual speeds; separating a sum mode and a difference mode by applying the equivalent sum value to the sum model and applying the equivalent difference value to the difference model; obtaining a sum instruction torque from the sum model and obtaining a difference instruction torque from the difference model; and controlling outputs of the left driving source and the right driving source, using the sum instruction torque and the difference instruction torque.

[Effect of Invention]

The disclosed vehicle control device and vehicle control method can suppress vibrations having different vibration characteristics between the running-straight state and the cornering state of a vehicle in a simple configuration without interference of left and right controls with each other by separating a sum model corresponding to the running-straight state and a difference model corresponding to the cornering state.

[Brief Description of Drawings]

FIG. 1 is a block diagram showing a vehicle to which a control device is applied.
FIG. 2 is a skeleton diagram showing an example of a configuration of a driving system of the vehicle.
FIG. 3 is a block diagram showing logic of a control method (vibration suppressing control) performed in a vehicle control device.
FIG. 4 is a diagram showing an example of a sum model of FIG. 3.
FIG. 5 is a diagram showing an example of a difference model of FIG. 3.
FIG. 6 is a schematic diagram showing a relationship between a frequency band of a band-pass filter and responsiveness.

[Embodiment to Carry out Invention]

Examples of the type of a vehicle that adopts a vehicle control device and a vehicle control method disclosed herein are an engine vehicle (a gasoline-powered vehicle, a diesel-powered vehicle), an electric vehicle, and a hybrid vehicle. The vehicle is an automobile that travels by driving left and right wheels (left and right driving wheels) using at least one driving source (e.g., an internal combustion engine or a motor), and is preferably an automobile that travels by driving left and right wheels (left and right drive wheels) using multiple driving sources. Here, one of the multiple driving sources is referred to as a left driving source, and another one of the driving sources is referred to as a right driving source. In addition, one of the left and right wheels positioned on the left side of the vehicle is referred to as a left wheel, and the other is referred to as a right wheel. The disclosed vehicle control device and vehicle control method can be used in controlling a vehicle provided with a left driving system including a left axle and a left wheel to which motion power from the left driving source is transmitted and a right driving system including a right axle and a right wheel to which motion power from the right driving source is transmitted.

The layout of each of the left driving source and the right driving source may or may not be set to correspond to the left-right direction determined based on the forward-traveling direction of the vehicle. The left driving system and the right driving system may operate independently of each other, or may be connected to each other via a transmission mechanism or a power distributing mechanism. The disclosed vehicle control device and vehicle control method can be used to control an in-wheel motor vehicle that drives the left and right wheels with respective different motors and also to control a torque vectoring vehicle in which the left and right wheels can transmit a driving force and a torque to each other.

[Embodiment]

[1. Configuration]

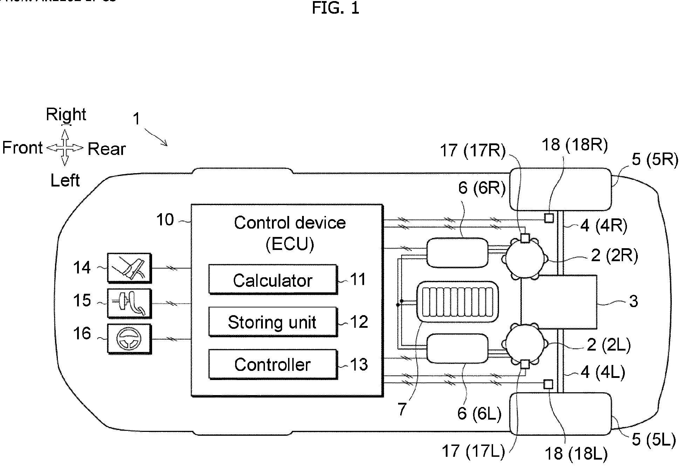

A control device 10 according to an embodiment is mounted on a vehicle 1 shown in FIG. 1. The vehicle 1 includes left and right wheels 5 (wheels) aligned side by side in the vehicle width direction, a power distributing mechanism 3 (differential mechanism) that applies a torque difference to the left and right wheels 5, and a pair of motors 2 connected to the power distributing mechanism 3. In the drawings illustrating the embodiment, alphabets R and L which are attached to the numerical signs represent the arrangement positions of the elements related to the signs (i.e., the positions on the right side and the left side of the vehicle 1). For example, the reference sign 5L represents one (left wheel) of the left and right wheels 5 located on the left side of the vehicle 1, and the reference sign 5R represents the other (right wheel) located on the right side. The left and right wheels 5 may be positioned anywhere in the front-rear direction and may be front wheels or rear wheels of the vehicle 1.

Each motor 2 (driving source) has a function of driving at least either one of the front wheels and the rear wheels of the vehicle 1, and can have a function of driving all four wheels. Of the pair of motors 2, one arranged on the left side is a left motor 2L (left driving source), and the other arranged on the right side is a right motor 2R (right driving source). The left motor 2L and the right motor 2R operate independently of each other, and may individually output driving forces having different magnitudes from each other. These motors 2 are connected to the power distributing mechanism 3 each via a pair of reduction mechanisms provided separately from each other.

The vehicle 1 includes the power distributing mechanism 3 that amplifies the torque difference between the pair of motors 2 and distributes the torque difference to each of left and right wheels 5. The power distributing mechanism 3 of the present embodiment is a differential mechanism having a yaw control function (AYC (Active Yaw Control) function), and is interposed between an axle 4 (left axle 4L) connected to the left wheel 5L and an axle 4 (right axle 4R) connected to the right wheel 5R. The yaw control function is a function that adjusts the yaw moment by actively controlling the sharing ratio of the driving forces (driving torques) of the left and right wheels 5 and stabilizes the posture of the vehicle 1. Inside the power distributing mechanism 3, a planetary gear mechanism and a differential gear mechanism are incorporated, for example. A vehicle driving device including the pair of motors 2 and the power distributing mechanism 3 is also referred to as a DM-AYC (Dual Motor AYC) device.

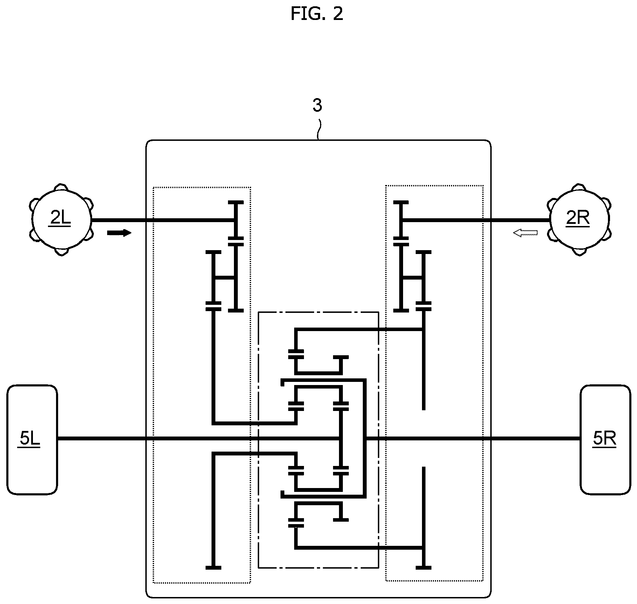

As shown in FIG. 2, the power distributing mechanism 3 includes the pair of reduction mechanisms (gear trains surrounded by dashed lines in FIG. 2) that reduces the rotational speeds of the motors 2 and a transmission mechanism (gear trains surrounded by one-dot dashed lines in FIG. 2). Each reduction mechanism is a mechanism that increases the torque by reducing the speed of the torque (driving force) output from the corresponding motor 2. The reduction ratio of the reduction mechanism is appropriately set according to the output characteristic and the performance of the motor 2. If the torque performances of the motors 2 are sufficiently high, the reduction mechanisms may be omitted. The transmission mechanism is a mechanism that amplifies the difference between torques transmitted to the left and right wheels 5.

The transmission mechanism of the power distributing mechanism 3 shown in FIG. 2 includes a pair of planetary gear mechanisms. These planetary gear mechanisms have a structure in which the rotation shafts of planetary gears provided on respective carriers are connected to each other. Each carrier supports the planetary gears such that the planetary gears can rotate and revolve between a sun gear and a ring gear. Further, the driving forces transmitted from the left and right motors 2 are inputted into the ring gear and the sun gear of one of the planetary gear mechanisms. The driving forces transmitted to the left and right wheels 5 are taken out from the sun gear and the carrier of the other planetary gear mechanism. Note that the structure of the power distributing mechanism 3 shown in FIG. 2 is merely exemplary for achieving the yaw control function, and can be replaced with another known structure.

As shown in FIG. 1, the pair of motors 2 are electrically connected to a battery 7 via respective inverters 6 (6L, 6R). Each inverter 6 is a converter (DC-AC inverter) that mutually converts the power (DC power) of a DC circuit on the side of the battery 7 and the power (AC power) of the AC circuits on the side of the motors 2. The battery 7 is, for example, a lithium-ion secondary battery or a nickel-metal hydride secondary battery, and is a secondary battery capable of supplying a high-voltage DC current of several hundred volts. While the motors 2 are power running, the DC power is converted into AC power by the inverters 6 and the converted AC power is then supplied to the motors 2. At the time of power generation of the motors 2, the generated electric power is converted into DC power by the inverters 6 and is charged into the battery 7. The operating status of each inverter 6 is controlled by the control device 10.

The control device 10 is one of electronic control units (ECUs) mounted on the vehicle 1. The control device 10 has a function of controlling outputs of the left motor 2L (left driving source) and the right motor 2R (right driving source) in the vehicle 1 provided with the left driving system including the left axle 4L and the left wheel 5L to which motion power from the left motor 2L is transmitted and the right driving system including the right axle 4R and the right wheel 5R to which motion power from the right motor 2R is transmitted.

The control device 10 includes a processor (central processing unit), a memory (main memory), a storage device (storage), an interface device, and the like, which do not appear in the drawings, and these elements are communicably coupled to each other via an internal bus. The contents of the determination and the control performed by the control device 10 are recorded and stored as firmware or an application program in the memory, and when the program is to be executed, the contents of the program are expanded in a memory space and executed by the processor.

To the control device 10, an accelerator position sensor 14, a brake sensor 15, a steering sensor 16, resolvers 17, and wheel speed sensors 18 are connected. The accelerator position sensor 14 is a sensor that detects the amount (accelerator opening) of depressing of the accelerator pedal and the depression speed. The brake sensor 15 is a sensor that detects the amount (brake pedal stroke) of depressing of the brake pedal and the depression speed. The steering sensor 16 is a sensor that detects a steering angle (actual steering angle or steering angle of the steering wheel) of the left and right wheels 5.

The resolvers 17 (17L, 17R) are sensors (detectors) that detect the actual angular speeds of the motors 2 and are provided one for each of the pair of motors 2. Each resolver 17 outputs data of a rotational angle of the motor 2 in the form of a two-phase AC voltage. The actual angular speed of the motor 2 is grasped from the chronological change of the AC voltage. The wheel speed sensors 18 (18L, 18R) are sensors (detectors) that detect the actual angular speeds of the axles 4. The control device 10 controls the operating status of the inverters 6 (6L, 6R) on the basis of the information detected by the above sensors 14 to 18 and thereby controls the outputs of the pair of motors 2 (2L, 2R). Instead of the resolvers 17, other sensors (detectors such as hall sensors and encoders) different in internal structure and operation principle may detect the actual angular speeds of the motors 2.

The vehicle 1 is provided with a detector that detects an actual speed (hereinafter referred to a "left actual speed") of the left driving system or the left motor 2L and an actual speed (hereinafter referred to as a "right actual speed") of the right driving system or the right motor 2R. Examples of the actual speed here include an actual angular speed of the axle 4, an actual angular speed or an actual wheel speed of the left or right wheel 5, an actual angular speed of the motor 2, and an angular speed (decelerated angular speed) after the actual angular speed of the motor 2 is decelerated by the reduction mechanism. The detector is a device or a sensor capable of detecting an actual speed, and is exemplified by the resolver 17 or the wheel speed sensor 18 described above.

[2. Control Device]

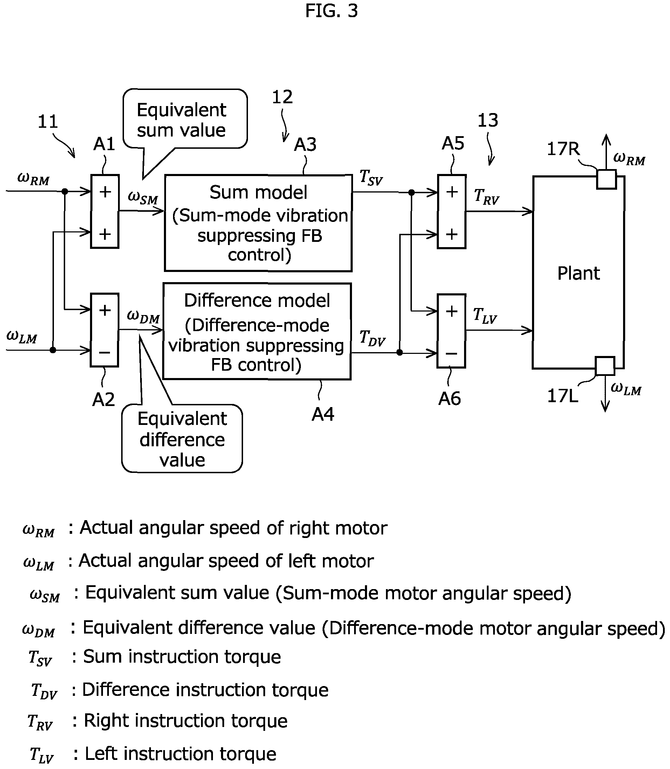

FIG. 3 is a block diagram illustrating a basic concept (logic) of control (vibration suppressing control subjected to a control method according to the embodiment) implemented in the control device 10. The plant in FIG. 3 represents objects (e.g., shafts and gears included in the motors 2 and the power distributing mechanism 3) located on power transmission paths upstream of the respective axles 4. In this control, vibrations of the left driving system and the right driving system are separated into a vibration while the vehicle 1 is running straight and a vibration while the vehicle 1 is cornering, and the former is isolated as a vibration of a sum mode and the latter is isolated as a vibration of a difference mode. Then, a torque for suppressing the vibration is obtained in each of the sum mode and the difference mode, and the obtained torques are returned to the left and right expressions, and then outputted (instructed) to the left motor 2L and the right motor 2R.

The storage device of the control device 10 stores a sum-mode vibration suppression model (hereinafter, also simply referred to as the "sum model") used in the sum mode and a difference-mode vibration suppression model (hereinafter, also simply referred to as the "difference model") used in the difference mode in advance. In other words, the present control method firstly prepares the sum model and the difference model. The sum model is a model that models motion states of the left driving system and the right driving system while the vehicle 1 is running straight, and the difference model is a model that models motion states of the left driving system and the right driving system while the vehicle 1 is cornering. The sum model and the difference model are models related to the vibration suppression.

Generally, the vehicle 1 generates different vibrations between a running-straight state and a cornering state, and the resonant frequencies in these states are also different from each other. As an example, although a resonant frequency varies depending on the type of the vehicle 1, the resonant frequency is about 6 Hz while the vehicle 1 is running straight, whereas the resonant frequency is smaller than this, for example, about 2 Hz while the vehicle 1 is cornering. As described above, in order to effectively suppress vibrations that are different depending on whether the traveling state of the vehicle 1 is the running-straight state (translational motion) or the cornering state (yaw motion) and to prevent the controls (outputs) for vibration suppression from interfering with each other on the left and right sides, the control (output) is separated into the above two modes and the models used one in each of the modes are provided. That is, for a resonant frequency which is different between the running-straight state and the cornering state, the sum model and the difference model are ones that activate vibration suppressing control under the respective running-straight and cornering states.

As shown in FIG. 3, the sum model is applied with an equivalent sum value $\omega_{SM}$ to output (derive) a sum instruction torque $T_{SV}$ for controlling the motors 2 while the vehicle 1 is running straight (specifically, for suppressing vibrations of the left driving system and the right driving system). Similarly, the difference model is applied with an equivalent difference value $\omega_{DM}$ to output (derive) a difference instruction torque $T_{DV}$ for controlling the motors 2 while the vehicle 1 is cornering (specifically, for suppressing vibrations of the left driving system and the right driving system). The equivalent sum value $\omega_{SM}$ is a generic term for a value corresponding to the sum of an actual angular speed $\omega_{LM}$ of the left motor 2L serving as the left driving source and an actual angular speed $\omega_{RM}$ of the right motor 2R serving as right driving source, and is also referred to as a "sum-mode motor angular speed $\omega_{SM}$". The equivalent sum value $\omega_{SM}$ may be not only a simple sum but also a product of the sum and a predetermined coefficient or the half of the sum (arithmetic mean value). The equivalent difference value $\omega_{DM}$ is a generic term for a value corresponding to the difference between the actual angular speed $\omega_{LM}$ of the left motor 2L and the actual angular speed $\omega_{RM}$ of the right motor 2R, and is also referred to as a "difference-mode motor angular speed $\omega_{DM}$". The equivalent difference value $\omega_{DM}$ may be not only a simple difference but also a product of the difference and a predetermined coefficient.

Step A1 in FIG. 3 corresponds to a step (converting step) of calculating an equivalent sum value $\omega_{SM}$ corresponding to the sum of the left actual speed and the right actual speed (for example, the sum of two actual angular speeds $\omega_{LM}$ and $\omega_{RM}$). The equivalent sum value $\omega_{SM}$ calculated in this step is applied to the sum model in Step A3 in FIG. 3. As a result, an output (sum instruction torque $T_{SV}$) for suppressing vibrations of the left driving system and the right driving system while the vehicle 1 is running straight is obtained, so that the vibration state of the vehicle 1 related to running straight is effectively suppressed. Step A2 in FIG. 3 corresponds to a step (converting step) of calculating an equivalent difference value $\omega_{DM}$ corresponding to the difference between the left actual speed and the right actual speed (for example, the difference between two actual angular speeds $\omega_{LM}$ and $\omega_{RM}$). The equivalent difference value $\omega_{DM}$ calculated in this step is applied to the difference model in Step A4 in FIG. 3. As a result, an output (difference instruction torque $T_{DV}$) for suppressing vibrations of the left driving system and the right driving system while the vehicle 1 is cornering is obtained, so that the vibration state of the vehicle 1 related to cornering is effectively suppressed.

Step A5 in FIG. 3 corresponds to a step (inverse converting step) that calculates an instruction torque (right instruction torque $T_{RV}$) to be outputted to the right motor 2R on the basis of the sum instruction torque $T_{SV}$ obtained from the sum model and the difference instruction torque $T_{DV}$ obtained from the difference model. The right instruction torque $T_{RV}$ calculated in this step is a torque-command value for suppressing the vibration of the right motor 2R. Step A6 in FIG. 3 corresponds to a step (inverse converting step) that calculates an instruction torque (left instruction torque $T_{LV}$) to be outputted to the left motor 2L on the basis of the sum instruction torque $T_{SV}$ obtained from the sum model and the difference instruction torque $T_{DV}$ obtained from the difference model. The left instruction torque $T_{LV}$ calculated in this step is a torque-command value for suppressing the vibration of the left motor 2L.

As described above, the vibration suppressing control of the present embodiment is a feedback (FB) control that aims at suppressing vibrations (in other words, brings the vibrations close to the target value of zero) by calculating torques $T_{LV}$ and $T_{RV}$ for suppressing the vibration from the actual speeds (e.g., actual angular speeds $\omega_{LM}$ and $\omega_{RM}$) of the motors 2 and outputting the torques $T_{LV}$ and $T_{RV}$ to the motors 2. Further, in this FB control, a sum model and a difference model which are independent from each other are provided, and a sum mode obtained by extracting only running-straight components from the actual speeds (e.g., the actual angular speeds $\omega_{LM}$ and $\omega_{RM}$) and a difference mode obtained by extracting only cornering components from the actual speeds are separated from each other. Consequently, different characteristics can be easily provided the sum instruction torque $T_{SV}$ for suppressing the vibration during the running-straight state and the difference instruction torque $T_{DV}$ for suppressing the vibration during the cornering state, without interference of the left and right instruction torques $T_{LV}$ and $T_{RV}$ with each other.

Next, description will now be made in relation to a specific configuration to perform the above-described control. As shown in FIG. 1, the control device 10 includes a calculator 11, a storing unit 12, and a controller 13. These elements are obtained by classifying the functions of the control device 10 for convenience. These elements may be described as independent programs for implementing the functions of the respective elements. Alternatively, these elements may be described as a combined program of multiple elements being combined.

The calculator 11 calculates the equivalent sum value $\omega_{SM}$ and the equivalent difference value $\omega_{DM}$ based on the actual speed of the left driving system or the left motor 2L and the counterpart actual speed of the right driving system or the right motor 2R. The calculator 11 of the present embodiment calculates the equivalent sum value $\omega_{SM}$ and the equivalent difference value $\omega_{DM}$ based on a detected value (actual angular speed $\omega_{LM}$) of the left resolver 17L and a detected value (actual angular speed $\omega_{RM}$) of the counterpart right resolver 17R. The following is a calculation equation when the half of the sum of the two actual angular speeds $\omega_{LM}$ and $\omega_{RM}$ is defined as the equivalent sum value (sum-mode motor angular speed $\omega_{SM}$) and the half of the difference between the two actual angular speeds $\omega_{LM}$ and $\omega_{RM}$ is defined as the equivalent difference value (difference-mode motor angular speed $\omega_{DM}$).

[Math 1]

$$\begin{pmatrix} \omega_{SM} \\ \omega_{DM} \end{pmatrix} = \begin{pmatrix} \dfrac{1}{2} & \dfrac{1}{2} \\ \dfrac{1}{2} & -\dfrac{1}{2} \end{pmatrix} \begin{pmatrix} \omega_{RM} \\ \omega_{LM} \end{pmatrix}$$

The storing unit 12 stores the above sum model and difference model. This embodiment gives the sum model a characteristic that is unlikely to generate the resonance during the running-straight state (a characteristic not containing a resonant frequency component during the running-straight state), and the difference model a characteristic that is unlikely to generate the resonance during the cornering state (a characteristic not containing a resonant frequency component during the cornering state). As the above, control with resonance frequencies different between the sum model and the difference model makes it possible to suppress vibrations in all driving states.

The sum model and the difference model of the present embodiment each include a band-pass filter (hereinafter, referred to as "BPF") that extracts a vibration component. A BPF is used to extract a resonant frequency component serving as a vibration component to be suppressed, and resonant components each to be extracted by one of the BPFs of the sum model and the differential model are determined.

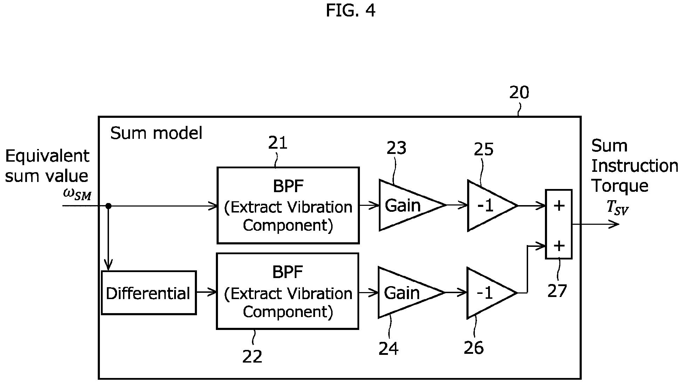

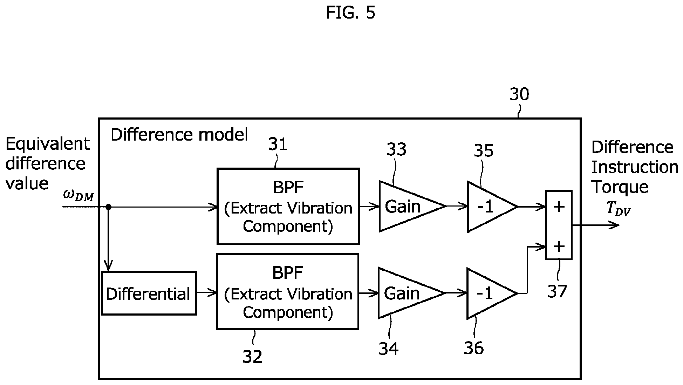

Here, an example of a sum model 20 is shown in FIG. 4, and an example of a difference model 30 is shown in FIG. 5. The sum model 20 of FIG. 4 includes BPFs 21 and 22 that extract a sum-mode frequency band in a first predetermined range including a resonant frequency $RF_S$ of the left and right driving systems while the vehicle 1 is running straight. The first predetermined range is, for example, a range of +/- 1 Hz of the resonant frequency $RF_S$ (i.e., equal to or larger than "RFs - 1" and equal to or smaller than "$RF_S + 1$"). For example, assuming that the resonant frequency $RF_S$ during the running-straight state is 6 Hz, the sum-mode frequency band in the first predetermined range is 5 Hz to 7 Hz.

The sum model 20 is provided with the BPF 21 that extracts a vibration component from the equivalent sum value and the BPF 22 that extracts a vibration component from a differential value of the equivalent sum value. The sum-mode frequency bands of the two BPFs 21 and 22 may be the same or different from each other. In addition, the sum model 20 is provided with first multipliers 23 and 24 each of which multiples a gain for converting a vibration component outputted from the BPF 21 or 22 to a torque, second multipliers 25 and 26 each of which converts the converted torque to a torque for vibration suppression, and an adder 27 that adds the two torques for vibration suppression. This means that the sum model 20 includes FB control consisting of P control (proportional BPF control) and D control (differential BPF control). The torque outputted from the adder 27 is the sum instruction torque $T_{SV}$ described above.

The difference model 30 shown in FIG. 5 is configured similarly to the sum model 20. The difference model 30 includes BPFs 31 and 32 that extract a difference-mode frequency band in a second predetermined range including a resonant frequency $RF_C$ of the left and right driving systems while the vehicle 1 is cornering. Like the first predetermined range, the second predetermined range is, for example, a range of +/- 1 Hz of the resonant frequency $RF_C$ (i.e., equal to or larger than "$RF_C - 1$" and equal to or smaller than "$RF_C + 1$"). For example, assuming that the resonant frequency $RF_C$ during the cornering state is 2 Hz, the sum-mode frequency band in the second predetermined range is 1 Hz to 3 Hz. The first predetermined range and the second predetermined range are not necessarily the same size.

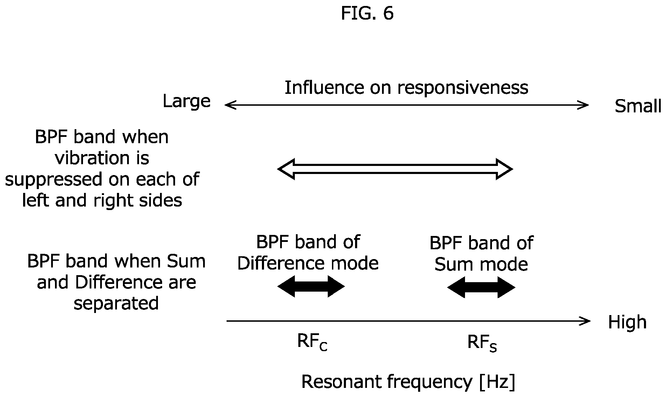

As indicated by the black arrows in FIG. 6, the sum-mode frequency band (sum-mode BPF band) and the difference-mode frequency band (difference-mode BPF band) are set so as not to overlap each other. A BPF band indicated by a white arrow in FIG. 6 is a comparative example, and represents a frequency band set in a conventional vibration suppressing control, which carries out vibration suppressing control in each of the left and right sides. As indicated by the white arrow, when an attempt is made to set a BPF in order to suppress the vibration (near $RF_S$) during the running-straight state and the vibration (near $RF_C$) during the cornering state, the BPF having a wide frequency band needs to be used.

Here, it is known that a lower resonant frequency more largely affects responsiveness (in particular, the acceleration responsiveness), as indicated by the horizontal axis in FIG. 6 representing "influence on responsiveness". For the above, setting a wide frequency band of a BPF as the conventional scheme has a problem that the responsiveness (in particular, the acceleration responsiveness at the time of starting or accelerating) lowers. In contrast, as indicated by the black arrows, this method, which sets the sum-mode frequency band (sum-mode BPF band) and the difference-mode frequency band (difference-mode BPF band) not to overlap each other, extracts a vibration during the running-straight state and a vibration during the cornering state separately from each other, so that the frequency bands can be set to a minimum and the influence on the responsiveness is reduced. In addition, since the vehicle 1 is accelerated normally while running straight not cornering, setting the sum-mode frequency band for extracting the vibration during the running-straight state is set to a higher side of the resonant frequency can achieve enhancement in the acceleration responsiveness.

As shown in FIG. 5, the difference model 30 is provided with the BPF 31 that extracts a vibration component from the equivalent difference value and the BPF 32 that extracts a vibration component from a differential value of the equivalent difference value. The difference-mode frequency bands of the two BPFs 31 and 32 may be the same or different from each other. In addition, the difference model 30 is provided with first multipliers 33 and 34 each of which multiples a gain for converting a vibration component outputted from the BPF 31 or 32 to a torque, second multipliers 35 and 36 each of which converts the converted torque to a torque for vibration suppression, and an adder 37 that adds the two torques for vibration suppression. This means that the difference model 30 also includes FB control consisting of the P control (proportional BPF control) and the D control (differential BPF control). The torque outputted from the adder 37 is the difference instruction torque $T_{DV}$ described above.

The controller 13 separates the two actual angular speeds $\omega_{LM}$ and $\omega_{RM}$ into the sum mode and the difference mode by applying the equivalent sum value $\omega_{SM}$ calculated in the calculator 11 to the above sum model stored in the storing unit 12 and applying the equivalent difference value $\omega_{DM}$ calculated in the calculator 11 to the above difference model stored in the storing unit 12. Then, the controller 13 controls the outputs of the left motor 2L and the right motor 2R by using the sum instruction torque $T_{SV}$ obtained from the sum model and the difference instruction torque $T_{DV}$ obtained from the difference model.

Specifically, the controller 13 calculates the left instruction torque $T_{LV}$ and the right instruction torque $T_{RV}$ from the sum instruction torque $T_{SV}$ and the difference instruction torque $T_{DV}$, and controls the left and right motors 2. Here, in coordination with the method for calculation in the calculator 11, the controller 13 outputs, as the left instruction torque $T_{LV}$, the half of the value obtained by subtracting the difference instruction torque $T_{DV}$ from the sum instruction torque $T_{SV}$, and outputs, as the right instruction torque $T_{RV}$, the half of the sum instruction torque $T_{SV}$ and the difference instruction torque $T_{DV}$. The left and right instruction torques $T_{LV}$ and $T_{SV}$ obtained here are torques intended to suppress vibrations. Apart from these torques, driving torques for driving the left motor 2L and the right motor 2R are separately determined and outputted (instructed) to the left motor 2L and the right motor 2R.

If using the sum model and the difference model each including the FB control consisting of the P control and the D control as shown in FIGs. 4 and 5, the controller 13 separates the sum mode and the difference mode from each other by using the differential value of the equivalent sum value and the differential value of the equivalent difference value in addition to the equivalent sum value and the equivalent difference value. FIGs. 4 and 5 illustrate the sum model and the differential model each including FB control consisting of the P control and the D control, but alternatively the FB control may include only the P control, or may further include I control (integration BPF control).

[3. Effect]

(1) The above control device 10 includes the calculator 11, the sum model, the difference model, and the controller 13. The calculator 11 calculates the equivalent sum value $\omega_{SM}$ corresponding to the sum of the two actual angular speeds $\omega_{LM}$ and $\omega_{RM}$ and also calculates the equivalent difference value $\omega_{DM}$ corresponding to the difference between the two actual angular speeds $\omega_{LM}$ and $\omega_{RM}$. Further, the sum model models motion states of the left driving system and the right driving system while the vehicle 1 is running straight and is applied with the equivalent sum value $\omega_{SM}$. The difference model models motion states of the left driving system and the right driving system while the vehicle 1 is cornering and is applied with the equivalent difference value $\omega_{DM}$.

The controller 13 isolates the sum mode extracted only the running-straight component from the two angular speeds $\omega_{LM}$ and $\omega_{RM}$ and the difference mode extracted only the cornering component from the two angular speeds $\omega_{LM}$ and $\omega_{RM}$ by applying the equivalent sum value $\omega_{SM}$ to the sum model and applying the equivalent difference value $\omega_{DM}$ to the difference model. Then, the controller 13 controls the left and right driving sources by using the sum instruction torque $T_{SV}$ obtained from the sum model and the difference instruction torque $T_{DV}$ obtained from the difference model.

This configuration can suppress vibrations having a vibration characteristic different between the running-straight state and the cornering state without interference of the left and right controls with each other. In addition, by separating the sum model corresponding to the running-straight state and the difference model corresponding to the cornering state and constructing these models independent of each other, the requirement for complex control on decoupling can be eliminated, so that the control device 10 can be designed more simply and the vibration suppression can be achieved with a simple configuration.

(2) In the above embodiment, each of the sum model and the difference model includes a band-pass filter that extracts a vibration component. With this configuration, it is possible to extract vibrations of the respective particular frequency bands from vibrations generated while the vehicle 1 is running straight and cornering and obtain torques $T_{SV}$ and $T_{DV}$ that can suppress the extracted vibrations with a simple configuration. Therefore, the vibration suppressing effect can be enhanced.

(3) In an example of the respective models shown in FIGs. 4 and 5, the controller 13 separates the sum mode and the difference mode by using not only equivalent sum value and the equivalent difference value but also the differential values of these values. As described above, by using the sum model and the difference model each including the FB control consisting of the P control and the D control, it is possible to bring the vibration component close to the target value of 0, so that the vibration suppressing effect can be further enhanced.

(4) The sum model may include the BPF that extracts the sum-mode frequency band of the first predetermined range covering the resonant frequency $RF_S$ (e.g., 6 Hz) of the left driving system and the right driving system during the running-straight state. The difference model may include the BPF that extracts the difference-mode frequency band of the second predetermined range covering the resonant frequency $RF_C$ (e.g., 2 Hz) of the left driving system and the right driving system during the cornering state. The sum-mode frequency band and the differential-mode frequency band are set so as not to overlap each other, so that only the vibration of the minimal-requisite frequency band can be extracted, as shown in FIG. 6. Therefore, in addition to the vibration suppressing effect, responsiveness (in particular, the acceleration responsiveness) can be enhanced.

[4. Miscellaneous]

The above embodiment is merely illustrative, and is not intended to exclude the application of various modifications and techniques not explicitly described in the present embodiment. Each configuration of the present embodiment can be variously modified and implemented without departing from the scope thereof. In addition, the configurations of the present embodiment can be selected and omitted as needed, or can be combined appropriately.
For example, the method of setting and the numerical value of the frequency band of the BPF included in each model are exemplary and the frequency band of the BPF may be set by a different method from the above. Further, the specific configurations of the respective models are not limited to those illustrated in FIGs. 4 and 5.
The above embodiment describes the vehicle 1 that mounts thereon the pair of motors 2 serving as driving sources, but an internal combustion engine may be applied in place of the motors 2. The specific type of the driving source is not limited. The vehicle 1 that includes a vehicle driving device (DM-AYC device) including the pair of motors 2 and the power distributing mechanism 3 is illustrated. However, the concept of the sum model and the difference model can be applied to any vehicle exemplified by a vehicle without the power distributing mechanism 3 or an in-wheel motor vehicle. A vehicle provided with at least a left driving system including a left axle and a left wheel to which motion power from the left driving source is transmitted and a right driving system including a right axle and a right wheel to which motion power from the right driving source is transmitted can undergo the control the same as the above embodiment and can obtain the same actions and effects as those of the above embodiment.

[5. Appendix]

In relation to the above embodiment and the modifications, the following appendices will now be disclosed.

[Appendix 1]

A vehicle control method for a vehicle, the vehicle comprising: a left driving system including a left axle and a left wheel, motion power from a left driving source being transmitted to the left axle and the left wheel; a right driving system including a right axle and a right wheel, motion power from a right driving source being transmitted to the right axle and the right wheel; and detectors that each detect one of an actual speed of the left driving system or the left driving source and an actual speed of the right driving system or the right driving source, the vehicle control method comprising:

preparing a sum model that models motion states of the left driving system and the right driving system while the vehicle is running straight and a difference model that models motion states of the left driving system and the right driving system while the vehicle is cornering in advance;
calculating an equivalent sum value corresponding to a sum of the two actual speeds and an equivalent difference value corresponding to a difference between the two actual speeds;
separating a sum mode and a difference mode by applying the equivalent sum value to the sum model and applying the equivalent difference value to the difference model;
obtaining a sum instruction torque from the sum model and obtaining a difference instruction torque from the difference model; and
controlling outputs of the left driving source and the right driving source, using the sum instruction torque and the difference instruction torque.

[Appendix2]

The vehicle control method according to appendix 1, wherein
each of the sum model and the difference model includes a band-pass filter that extracts a vibration component.

[Appendix3]

The vehicle control method according to appendix 1 or 2, further comprising
separating the two actual speeds into the sum mode and the difference mode, also using a differential value of the equivalent sum value and a differential value of the equivalent difference value.

[Appendix 4]

The vehicle control method according to claim 2 or appendix 3 citing appendix 2, wherein

the sum model includes the band-pass filter that extracts a sum-mode frequency band in a first predetermined range covering a resonant frequency of the left driving system and the right driving system while the vehicle is running straight, and

the difference model includes the band-pass filter that extracts a difference-mode frequency band in a second predetermined range covering a resonant frequency of the left driving system and the right driving system while the vehicle is cornering, the difference-mode frequency band not overlapping the sum-mode frequency band.

[Industrial Applicability]

The present embodiment is applicable to manufacturing industries of a vehicle control device and also applicable to manufacturing industries of a vehicle provided with the vehicle control device.

[Description of Reference Sign]

| | |
|---|---|
| 1 | Vehicle |
| 2 | Motor (Driving Source) |
| 3 | Power Distributing Mechanism |
| 4 | Axle |
| 5 | Left and Right Wheels |
| 6 | Invertor |
| 7 | Battey |
| 10 | Control Device |
| 11 | Calculator |
| 12 | Storing Unit |
| 13 | Controller |
| 14 | Accelerator Position Sensor |
| 15 | Brake Sensor |
| 16 | Steering Sensor |
| 17, 17L, 17R | Resolver (Detector) |
| 18, 18L, 18R | Wheel Speed Sensor (Detector) |
| 20 | Sum Model |
| 21, 22 | Band-pass Filter, BPF |
| 23, 24 | First Multiplier |
| 25, 26 | Second Multiplier |
| 27 | Adder |
| 30 | Difference Model |
| 31, 32 | Band-Pass Filter, BPF |
| 33, 34 | First Multiplier |
| 35, 36 | Second Multiplier |
| 37 | Adder |

**Claims**

1. A vehicle control device for a vehicle, the vehicle comprising: a left driving system including a left axle and a left wheel, motion power from a left driving source being transmitted to the left axle and the left wheel; a right driving system including a right axle and a right wheel, motion power from a right driving source being transmitted to the right axle and the right wheel; and detectors that each detect one of an actual speed of the left driving system or the left driving source and an actual speed of the right driving system or the right driving source, the vehicle control device comprising:

   a calculator that calculates an equivalent sum value corresponding to a sum of the two actual speeds and an equivalent difference value corresponding to a difference between the two actual speeds;
   a sum model that models motion states of the left driving system and the right driving system while the vehicle is running straight, the equivalent sum value being applied to the sum model;
   a difference model that models motion states of the left driving system and the right driving system while the vehicle is cornering, the equivalent difference value being applied to the difference model; and
   a controller that separates the two actual speeds into a sum mode and a difference mode by applying the equivalent sum value to the sum model and applying the equivalent difference value to the difference model, and controls outputs of the left driving source and the right driving source, using a sum instruction torque obtained from the sum model and a difference instruction torque obtained from the difference model.

2. The vehicle control device according to claim 1, wherein
each of the sum model and the difference model includes a band-pass filter that extracts a vibration component.

3. The vehicle control device according to claim 1, wherein
the controller separates the two actual speeds into the sum mode and the difference mode, also using a differential value of the equivalent sum value and a differential value of the equivalent difference value.

4. The vehicle control device according to claim 2, wherein
the controller separates the two actual speeds into the sum mode and the difference mode, also using a differential value of the equivalent sum value and a differential value of the equivalent difference value.

5. The vehicle control device according to claim 2 or 4, wherein

the sum model includes the band-pass filter that extracts a sum-mode frequency band in a first predetermined range covering a resonant frequency of the left driving system and the right driving system while the vehicle is running straight, and
the difference model includes the band-pass filter that extracts a difference-mode frequency band in a second predetermined range covering a resonant frequency of the left driving system and the right driving system while the vehicle is cornering, the difference-mode frequency band not overlapping the sum-mode frequency band.

6. A vehicle control method for a vehicle, the vehicle comprising: a left driving system including a left axle and a left wheel, motion power from a left driving source being transmitted to the left axle and the left wheel; a right driving system including a right axle and a right wheel, motion power from a right driving source being transmitted to the right axle and the right wheel; and detectors that each detect one of an actual speed of the left driving system or the left driving source and an actual speed of the right driving system or the right driving source, the vehicle control method comprising:

preparing a sum model that models motion states of the left driving system and the right driving system while the vehicle is running straight and a difference model that models motion states of the left driving system and the right driving system while the vehicle is cornering in advance;
calculating an equivalent sum value corresponding to a sum of the two actual speeds and an equivalent difference value corresponding to a difference between the two actual speeds;
separating a sum mode and a difference mode by applying the equivalent sum value to the sum model and applying the equivalent difference value to the difference model;
obtaining a sum instruction torque from the sum model and obtaining a difference instruction torque from the difference model; and
controlling outputs of the left driving source and the right driving source, using the sum instruction torque and the difference instruction torque.

FIG. 1

FIG. 2

FIG. 3

$\omega_{RM}$ : Actual angular speed of right motor

$\omega_{LM}$ : Actual angular speed of left motor

$\omega_{SM}$ : Equivalent sum value (Sum-mode motor angular speed)

$\omega_{DM}$ : Equivalent difference value (Difference-mode motor angular speed)

$T_{SV}$ : Sum instruction torque

$T_{DV}$ : Difference instruction torque

$T_{RV}$ : Right instruction torque

$T_{LV}$ : Left instruction torque

FIG. 4

20

Sum model

Equivalent
sum value
$\omega_{SM}$

21

BPF
(Extract Vibration
Component)

23

Gain

25

-1

Differential

BPF
(Extract Vibration
Component)

22

Gain

24

-1

26

+

+

27

Sum
Instruction
Torque
$T_{SV}$

FIG. 5

FIG. 6

Influence on responsiveness

Large ⟵————————————————————⟶ Small

BPF band when
vibration is
suppressed on each of
left and right sides

⟸————————————————⟹

BPF band when Sum
and Difference are
separated

BPF band of
Difference mode

⟵▬▬▶

BPF band of
Sum mode

⟵▬▬▶

————————————————⟶ High

RF$_C$         RF$_S$

Resonant frequency [Hz]

**EP 4 574 531 A1**

## INTERNATIONAL SEARCH REPORT

| International application No. |
| --- |
| **PCT/JP2023/025521** |

| A. | CLASSIFICATION OF SUBJECT MATTER |
| --- | --- |

*B60L 15/20*(2006.01)i; *B60W 30/20*(2006.01)i
FI:   B60L15/20 S; B60W30/20

According to International Patent Classification (IPC) or to both national classification and IPC

| B. | FIELDS SEARCHED |
| --- | --- |

Minimum documentation searched (classification system followed by classification symbols)

B60L15/20; B60W30/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021/220693 A1 (MITSUBISHI JIDOSHA KOGYO KABUSHIKI KAISHA) 04 November 2021 (2021-11-04)<br>paragraphs [0009]-[0022], fig. 1, 2 | 1-6 |
| A | JP 2021-88349 A (KABUSHIKI KAISHA TOYOTA CHUO KENKYUSHO) 10 June 2021 (2021-06-10)<br>paragraphs [0013]-[0034], fig. 1-5 | 1-6 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 September 2023** | **26 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/025521**

| Patent document cited in search report | | | Publication date (day/month/year) | Patent family member(s) | Publication date (day/month/year) |
|---|---|---|---|---|---|
| WO | 2021/220693 | A1 | 04 November 2021 | (Family: none) | |
| JP | 2021-88349 | A | 10 June 2021 | (Family: none) | |

Form PCT/ISA/210 (patent family annex) (January 2015)

20

**REFERENCES CITED IN THE DESCRIPTION**

**Patent documents cited in the description**

- JP 2019103249 A